# DEMANDE DE BREVET EUROPEEN

(11) **EP 1 522 368 A1**
(43) Date de publication de la demande: **13.04.2005**
(21) Numéro de dépôt: 04292323.5
(22) Date de dépôt: 29.09.2004
(51) Int. Cl.: B23K 1/00, B23K 1/19, B23K 35/28, B23K 35/02, F01D 9/04

(54) **Procédé de brasage sous une pression gazeuse inférieure à 10-2 Pa d'un redresseur de compresseur de turbomachine en alliage de titane**

(30) Priorité: 10.10.2003 FR 0311890
(71) Demandeur: SNECMA MOTEURS, 75015 Paris (FR)
(72) Inventeur: Clement, Jean-François, Didier, 91330 Yerres (FR)
(74) Mandataire: Rousset, Jean-Claude

(57) **Abrégé**

Des pièces métalliques (1,3) à base de titane sont brasées sous une pression gazeuse inférieure à 10⁻² Pa en utilisant comme métal d'apport (7) un alliage d'aluminium contenant du magnésium et pratiquement exempt de silicium.

Ce procédé d'assemblage s'applique, en particulier, à la liaison des aubes (3) à la virole intérieure (1) d'un redresseur de compresseur de turbomoteur aéronautique.

## Description

L'invention concerne un procédé de liaison de pièces métalliques à base de titane, notamment de la virole intérieure et des aubes d'un redresseur de compresseur de turbomoteur aéronautique.

On utilise actuellement pour fixer les aubes en alliage de titane d'un redresseur à la virole intérieure en alliage de titane un collage par des élastomères de silicone vulcanisés à froid. La durée de vie de ces élastomères diminue lorsque la température de fonctionnement du compresseur augmente. Ainsi, pour les compresseurs de nouvelle génération fonctionnant à des températures voisines de 300 °C en continu dans une ambiance contenant des brouillards d'huile, les colles à base d'élastomères de silicone subissent un effritement qui limite la durée de vie pratique à 100 heures.

Par ailleurs, EP 1 148 208 A décrit un procédé de liaison par brasage des aubes à la virole intérieure d'un redresseur par brasage, mais sans indiquer les matériaux constitutifs des pièces et de la brasure. Les brasures possèdent d'une manière générale une durée de vie suffisante dans l'environnement évoqué ci-dessus. Cependant l'état de la technique n'enseigne pas de métaux d'apport adaptés au brasage des métaux à base de titane.

Le but de l'invention est de combler cette lacune, et d'éliminer ainsi les inconvénients du procédé connu de collage par des élastomères de silicone.

Il a été constaté de manière surprenante que des alliages d'aluminium disponibles dans le commerce et destinés notamment à la construction mécanique ou au soudage électrique conviennent pour le brasage des métaux à base de titane.

L'invention vise notamment un procédé du genre défini en introduction, et prévoit qu'il comporte un brasage utilisant comme métal d'apport un alliage d'aluminium contenant du magnésium et pratiquement exempt de silicium.

Les tenues mécanique, physique et chimique de la liaison obtenue par le procédé selon l'invention sont améliorées par rapport aux liaisons collées. De plus, le brasage est moins coûteux que le collage tant par la matière que par la mise en oeuvre.

La présence de silicium dans le métal d'apport est défavorable car elle abaisse la température d'utilisation et la résistance à la corrosion.

Des caractéristiques optionnelles de l'invention, complémentaires ou de substitution, sont énoncées ci-après:
- Ledit alliage d'aluminium contient 0,5 à 8 % de magnésium en masse.
- Ledit alliage d'aluminium contient environ 5 % de magnésium en masse.
- Ledit alliage d'aluminium ne contient pas plus de 0,3 % de silicium en masse.
- Lesdites pièces métalliques sont en un alliage à base de titane contenant 5,5 à 6,75 % d'aluminium et 3,5 à 4,5 % de vanadium en masse.
- Le brasage est réalisé sous une pression gazeuse inférieure à 1.10⁻² Pa.
- La température maximale atteinte par les pièces à braser lors du brasage est comprise entre 660 et 670 °C environ.
- La durée d'exposition des pièces à braser à des températures comprises entre 660 et 670 °C environ est de 10 min environ.
- Le métal d'apport pénètre dans un interstice ou jeu d'assemblage entre les pièces à braser d'une épaisseur inférieure à 0,8 mm.
- Le métal d'apport pénètre dans un interstice entre les pièces à braser d'une épaisseur au moins égale à 0,05 mm.
- On utilise une quantité de métal d'apport comprise entre 1,5 et 2 fois le volume dudit interstice.
- Ledit alliage d'aluminium est appliqué sous forme d'un fil.
- Ledit fil a un diamètre de 0,5 à 2,5 mm environ.
- Lesdites pièces métalliques sont une virole intérieure et une multiplicité d'aubes d'un redresseur de compresseur de turbomachine, lesdites aubes étant réparties dans la direction circonférentielle et s'étendant radialement de la virole intérieure à une virole extérieure, chacune d'elles traversant une ouverture correspondante ménagée dans la virole intérieure.
- Des régions d'extrémité des aubes font saillie radialement vers l'intérieur au-delà de la virole intérieure.
- On dispose ledit fil en contact avec la face interne de la virole intérieure et le long du profil des aubes.

L'invention a également pour objet un redresseur de compresseur de turbomachine comprenant une virole intérieure à base de titane, une virole extérieure et une multiplicité d'aubes à base de titane réparties dans la direction circonférentielle s'étendant radialement de la virole intérieure à la virole extérieure, chaque aube traversant une ouverture correspondante ménagée dans la virole intérieure, caractérisé en ce que les aubes sont fixées à la virole intérieure par une brasure à base d'aluminium contenant du magnésium et pratiquement exempte de silicium, réalisée notamment par le procédé ci-dessus.

Les caractéristiques et avantages de l'invention sont exposés plus en détail dans la description ci-après, avec référence aux dessins annexés.

La figure 1 est une vue partielle en coupe axiale d'un étage de redresseur de compresseur de turbomoteur aéronautique, montrant une aube reliée à la virole intérieure par le procédé selon l'invention.

La figure 2 est une vue de détail en coupe montrant un fil d'alliage d'aluminium mis en place en vue du brasage de l'aube à la virole intérieure.

La figure 3 est une vue analogue à la figure 2 montrant l'assemblage obtenu après brasage.

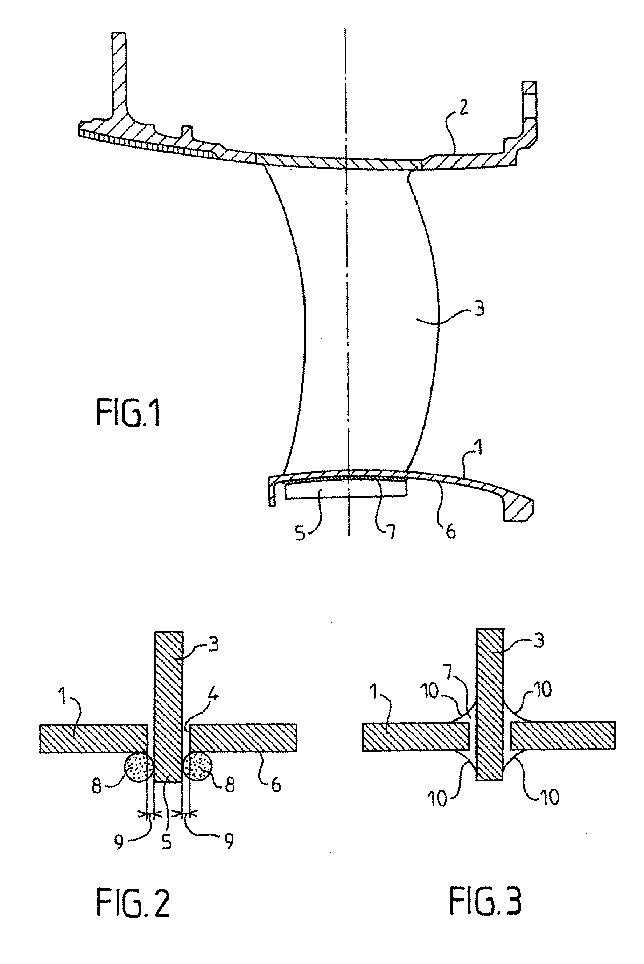

Sur les figures 2 et 3, pour plus de clarté, la virole 1 et l'aube 3 sont représentées schématiquement sous la forme de plaques planes d'épaisseur uniforme.

L'étage de redresseur partiellement représenté comprend de manière classique une virole intérieure 1 et une virole extérieure 2, toutes deux fixes, et une série d'aubes redresseuses 3 s'étendant dans une direction générale radiale de la virole intérieure à la virole extérieure. Les aubes 3 sont réparties dans la direction circonférentielle, généralement de façon uniforme. La virole intérieure 1 est percée d'ouvertures 4 dont la forme est adaptée au profil des aubes. Chacune d'entre elles est traversée par une aube 3 dont une région d'extrémité 5 fait saillie en direction de l'axe du moteur au-delà de l'ouverture 4 et par conséquent de la face interne 6 de la virole 1. Les aubes 3 sont fixées à la virole extérieure 2 par exemple par des soudures réalisées par faisceau d'électrons.

Selon l'invention, les aubes 3 sont fixées à la virole intérieure 1 par des brasures 7 réalisées en utilisant comme métal d'apport un alliage d'aluminium contenant 0,5 à 8 % de magnésium en masse et pratiquement exempt de silicium.

Avantageusement, l'alliage d'aluminium est mis en oeuvre sous forme d'un fil d'un diamètre de 2 mm environ.

Un exemple de mise en oeuvre de l'invention est décrit ci-après pour le brasage d'aubes à la virole intérieure d'un étage de redresseur de compresseur d'un turbomoteur aéronautique, les aubes et la virole intérieure étant en alliage TA6V qui est un alliage à base de titane contenant 6 % d'aluminium et 4 % de vanadium en masse.

On insère les aubes 3 dans des ouverture 4 ménagées à travers la paroi de la virole intérieure 1 et adaptées à la section transversale des aubes, de telle sorte qu'un interstice ou jeu d'assemblage 9 d'une épaisseur de 0,35 mm subsiste autour de celles-ci entre leur surface et la surface en regard des ouvertures 4. Une région d'extrémité 5 de chaque aube fait saillie en direction de l'axe du moteur au-delà de la face interne 6 de la virole 1. On dispose un fil 8 d'un alliage à base d'aluminium contenant 5 % de magnésium et moins de 0,3 % de silicium en masse, d'un diamètre de 2 mm, plié en U autour de la région 5 de manière à venir en contact avec les faces opposées de celle-ci et avec la face 6 de la virole, comme montré sur la figure 2.

On place l'ensemble ainsi obtenu dans un four sous vide dans lequel on abaisse la pression au-dessous de 1.10⁻² Pa. On réalise alors le cycle thermique suivant:
- montée de 20 à 400 °C à 7 °C/min
- palier à 400 °C pendant 30 min
- montée jusqu'à 600 °C à 7 °C/min
- palier à 600 °C pendant 10 min
- montée jusqu'à 660 °C à 7 °C/min
- maintien entre 660 et 670 °C pendant 10 minutes
- refroidissement sous vide jusqu'à 400 °C puis sous gaz neutre.

Pendant ce traitement, le métal constituant le fil 8 fond et pénètre par capillarité dans l'interstice ou jeu d'assemblage 9 qu'il remplit pour former après refroidissement une brasure 7 qui forme des rayons de raccordement 10 de chaque côté de la virole et de l'aube.

L'exemple ci-dessus n'a aucun caractère limitatif. En particulier, le métal d'apport peut être mis en oeuvre sous une forme différente d'un fil, par exemple sous forme d'un feuillard, d'une poudre ou d'une pâte, et peut alors être mis en place dans l'interstice 9, en débordant de préférence vers l'intérieur et/ou vers l'extérieur de la virole 1. Le métal à base de titane constituant les pièces à braser peut avoir une composition différente de celle de l'alliage TA6V.

## Revendications

1. Procédé de liaison de pièces métalliques (1, 3) à base de titane, **caractérisé en ce qu'**il comporte un brasage sous une pression gazeuse inférieure à 1.10⁻² Pa utilisant comme métal d'apport un alliage d'aluminium contenant du magnésium et pratiquement exempt de silicium.

2. Procédé selon la revendication 1, dans lequel ledit alliage d'aluminium contient 0,5 à 8 % de magnésium en masse.

3. Procédé selon la revendication 2, dans lequel ledit alliage d'aluminium contient environ 5 % de magnésium en masse.

4. Procédé selon l'une des revendications précédentes, dans lequel ledit alliage d'aluminium ne contient pas plus de 0,3 % de silicium en masse.

5. Procédé selon l'une des revendications précédentes, dans lequel lesdites pièces métalliques (1, 3) sont en un alliage à base de titane contenant 5,5 à 6,75 % d'aluminium et 3,5 à 4,5 % de vanadium en masse.

6. Procédé selon l'une des revendications précédentes, dans lequel la température maximale atteinte par les pièces à braser (1, 3) lors du brasage est comprise entre 660 et 670 °C environ.

7. Procédé selon la revendication 6, dans lequel la durée d'exposition des pièces à braser (1, 3) à des températures comprises entre 660 et 670 °C environ est de 10 min environ.

8. Procédé selon l'une des revendications précédentes, dans lequel le métal d'apport pénètre dans un interstice ou jeu d'assemblage (9) entre les pièces à braser (1, 3) d'une épaisseur inférieure à 0,8 mm.

9. Procédé selon l'une des revendications précédentes, dans lequel le métal d'apport pénètre dans un interstice (9) entre les pièces à braser (1, 3) d'une épaisseur au moins égale à 0,05 mm.

10. Procédé selon l'une des revendications 8 et 9, dans lequel on utilise une quantité de métal d'apport comprise entre 1,5 et 2 fois le volume dudit interstice.

11. Procédé selon l'une des revendications précédentes, dans lequel ledit alliage d'aluminium est appliqué sous forme d'un fil (8).

12. Procédé selon la revendication 11, dans lequel ledit fil (8) a un diamètre de 0,5 à 2,5 mm environ.

13. Procédé selon l'une des revendications précédentes, dans lequel lesdites pièces métalliques sont une virole intérieure (1) et une multiplicité d'aubes (3) d'un redresseur de compresseur de turbomachine, lesdites aubes étant réparties dans la direction circonférentielle et s'étendant radialement de la virole intérieure à une virole extérieure (2), chacune d'elles traversant une ouverture correspondante (4) ménagée dans la virole intérieure (1).

14. Procédé selon la revendication 13, dans lequel des régions d'extrémité (5) des aubes (3) font saillie radialement vers l'intérieur au-delà de la virole intérieure (1).

15. Procédé selon l'une des revendications 13 et 14, rattachée à la revendication 11, dans lequel on dispose ledit fil (8) en contact avec la face interne (6) de la virole intérieure (1) et le long du profil des aubes (3).

16. Redresseur de compresseur de turbomachine comprenant une virole intérieure (1) à base de titane, une virole extérieure (2) et une multiplicité d'aubes (3) à base de titane réparties dans la direction circonférentielle s'étendant radialement de la virole intérieure à la virole extérieure, chaque aube traversant une ouverture correspondante (4) ménagée dans la virole intérieure, **caractérisé en ce que** les aubes sont fixées à la virole intérieure par une brasure (7) à base d'aluminium contenant du magnésium et pratiquement exempte de silicium, réalisée par le procédé selon l'une des revendications 1 à 15.
